(19) Europäisches Patentamt / European Patent Office / Office européen des brevets

(11) **EP 2 535 835 B1**

(12) **EUROPEAN PATENT SPECIFICATION**

(45) Date of publication and mention
of the grant of the patent:
**14.10.2020 Bulletin 2020/42**

(51) Int Cl.:
***G06F 21/32*** *(2013.01)*

(21) Application number: **12004429.2**

(22) Date of filing: **12.06.2012**

(54) **Real-time user identification by hand motion signatures**

Echtzeit-Benutzeridentifizierung durch Handbewegungssignaturen

Identification d'utilisateur en temps réel par signatures à mouvement manuel

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.06.2011 IL 21351511**

(43) Date of publication of application:
**19.12.2012 Bulletin 2012/51**

(73) Proprietor: **Deutsche Telekom AG
53113 Bonn (DE)**

(72) Inventors:
• **Berman, Sigal
Ramat Hasharon (IL)**
• **Stern, Helman
Tel Aviv (IL)**

• **Mendels, Omri
Moza Illit (IL)**
• **Kliche, Ingmar
10407 Berlin (DE)**
• **Minkwitz, Johannes
10318 Berlin (DE)**
• **Stegmann, Joachim
64289 Darmstadt (DE)**

(74) Representative: **Flaccus, Rolf-Dieter
Flaccus · Müller-Wolff
Patentanwälte
Bussardweg 10
50389 Wesseling (DE)**

(56) References cited:
EP-A2- 2 166 487      EP-A2- 2 605 172
US-A1- 2007 252 898      US-A1- 2008 020 733

## Description

### Field of the invention

This invention relates to a user identification system for identifying a user through hand motion recognition.

### Background of the invention

User identification systems are mainly based on biometrics - the field of statistics in biology. These conventional systems mainly rely on one of two types of information:

- *Physiological* data using physical measurements such as fingerprints, DNA, face or iris recognition;
- *Behavioral* data using individual behavioral attributes. Examples are, gait, voice, typing rhythm and eye movement recognition. Behavioral identification is becoming more common since imitation of behavioral aspects of an individual is more challenging than physiological features.

In terms of identification using hand motion, conventional systems check the difference among people based on the performance of a pre-defined template or trajectory. In some systems, the user has to track a set of markers on the screen. In others, the user is asked to perform a certain shape with his/her hand.

EP 2 166 487 discloses a system for restricting access to an item of interest. A gesture input interface converts a continuous gesture from a user into an input trajectory, which is reduced to a set of reference points. A verification component determines if values for a set of reference points from a given input falls within an authentication region.

US 2008/0020733 discloses a mobile electronic device with motion detection authentication. An acceleration module generates an acceleration signal representing user motion of the device. A lock circuit for enabling operation of a function of the device in response to the acceleration signal indicates that the user motion deviates from reference motion data by no more than a predetermined threshold.

US 2007/0252898 discloses a remote control apparatus using gesture recognition. A controller transitions from a dormant mode to an active mode to perform a programmed responsive action when the image processor detects a progression within the captured photographs between a closed fist state to an open hand state.

EP 2 605 172 discloses a system of authorizing access to a resource. An act of identifying current gestures is performed for each user in accordance with sensor information. The current gestures are compared with pre-stored gesture information and an order of the predetermined gestures, in order to authorize access.

However, such conventional systems still suffer from a major drawback, since the user is required to perform a dictated movement, which is not natural and less intuitive. Therefore, it is harder to extract biometric parameters that are typical to a specific user. In addition, using such a pre-defined template or trajectory limits the user's possibility to select an intuitive gesture that he/she likes or is easier to remember.

It is therefore an object of the present invention to provide a method for identifying a user according to a self selected hand motion gesture.

It is another object of the present invention to provide a method for identifying a user according to a hand gesture that is typical to him/her.

It is a further object of the present invention to provide a method for identifying a user and allowing intuitive enrollment.

It is yet a further object of the present invention to present a user enrollment method that is interactive with feedback so as not to decrease the recognition accuracy of the system due to other previously enrolled users.

A further objective is to present a user enrollment method that detects if the users motion signature is consistent over repeated presentations and to refuse acceptance due to such inconsistency.

Other objects and advantages of the invention will become apparent as the description proceeds.

### Summary of the invention

The system of the present invention recognizes gestures by the motion the hand makes in front of a sensor capable of capturing a plurality of images. Such systems can be used to control a television and other electronic devices. The system allows user enrollments and user identification, with the hand motion signature determined by the user. The method of the present invention has been designed to allow new users to enroll with a new signature, presented in front of a camera. The enrollment method is interactive with feedback that so as to not decrease the recognition accuracy of the system due to other previously enrolled users.

In a first aspect, the present invention is directed to a system for real time user identification based on a user-decided 3D hand motion gesture representing his/her signature, which comprises: a 3D camera for acquiring images of the 3D gestures when performed in front of the camera; a memory for storing the images; a computer for analyzing images representing trajectories of the gesture and for extracting typical features related to the user during a training stage; a screen for displaying a typical trajectory containing the features to the user; a database for storing the typical features after the training stage; and a processing unit for comparing the typical features extracted during the training stage to features extracted online.

In a second aspect, the present invention is directed to a method for real time user identification, based on a user-decided hand motion signature, comprising: a) a onetime offline or online enrollment session, wherein the user enrolls him/herself in a one-time process of several samples of his/her signature and a template based on these training samples built for future classification; and b) an identification part.

In an embodiment of the method of the present invention, the enrollment part is made offline and comprises the following steps: (a) collecting samples: the system captures a hand gesture for a constant duration and creates a trajectory out of the palm's location at each frame; (b) creation of segments: the system identifies specific areas in the trajectory using a curvature measure, and constructs segments around each curved area; (c) curve fitting: segments are combined and points are distributed uniformly inside each segment and each sample is built out of a fitted curve defined by a constant number of points; (d) sample verification: each sample is shown to the user for verification, if the collecting samples step or the fitting step were not successful, the user can choose to remove the sample; (e) store sample: the fitted trajectory is saved in a database under user *i;* and (f) enrollment completion: once the enrollment is finished the database is aligned using ASM and principal points are extracted using PCA.

In an embodiment of the method of the present invention, the identification part is made according to offline enrollment, and comprises the following steps: (a) record sample: the system captures a hand gesture for a constant duration and creates a trajectory out of the palm's location at each frame; features from the sample are extracted in an identical way to the collecting samples step, curve fitting step and the finishing enrollment step; (b) align sample: the sample is aligned to the mean of each user's class for testing; (c) find similarity distance: mahalanobis distance is measured between the sample's principal points and each user's class;(d) compare: The sample is classified to the user to whom it is the closest, if the mahalanobis distance exceeds a threshold, the sample is classified as "Not Found"; and (e) plot: the user receives a message that his/her sample was classified or not.

In an embodiment of the method of the present invention, the enrollment part is made online and comprises the following steps: (a) the system collects a sample using the steps of collecting samples, creation of segments, curve fitting and sample verification during the offline enrollment of a new user; samples of each individual user may be represented by a set of multiple clusters; (b) a sample of a new user is compared to cluster(s) of the enrolling user and of other users, it is assumed that a signature can be performed in several different manners and therefore groups of clusters of the same user may be created; (c) the system can notify the enrolling user to select a different signature in the following conditions: in the case the number of clusters created for the enrolling user is too high; this case would occur when the enrolling user performs the same gesture in a multitude of ways; and if the closest cluster to a user's sample is a cluster belonging to a different user.

In an embodiment of the method of the present invention, in a post processing phase clusters that are closer than a threshold T, are merged into one cluster, in order for the classification to be as accurate as possible.

In an embodiment of the method of the present invention, the identification part is according to the Online enrollment, and comprises the following steps: (a) record sample: the system captures a hand gesture for a constant duration and creates a trajectory out of the palm's location at each frame; features from the sample are extracted in an identical way to the collecting samples step, curve fitting step and the finishing enrollment step of the enrollment part; (b) the sample is compared against each cluster of samples in the database for maximum similarity; (c) a distance measure selects the closest cluster of samples; (d) the current signature examined is classified to the user that created this cluster; and (e) if the distance is above a threshold, the signature is not likely to belong to any cluster, and therefore is classified as "Not Found".

In an embodiment of the method of the present invention, the curve fitting comprises the following steps: (a) construction of a trajectory; (b) aligning all samples in terms of rotation, scaling and translation; (c) saving the samples in a 3D matrix: {$n$} X {#samples} X {#users}; (d)applying a method called "Point Distribution Model" (PDM), using a method called PCA (Principal Components Analysis) for the reduction of the amount of features; and (e)keeping the output values of the PDM step as features for classification.

In an embodiment of the method of the present invention, the construction of a trajectory, comprises the following steps: (a) trajectory cleaning: remove start and end noise; (b) division into segments; and (c) construction of the new trajectory.

## Brief Description of the Drawings

EP 2 535 835 B1

- Fig. 1 schematically illustrates signature acquisition;
- Fig. 2 is an example of the same "X" shape done differently by different individuals, showing the identification opportunities in hand motion;
- Fig. 3 schematically shows a flowchart of an offline enrollment subsystem ;
- Fig. 4 schematically shows a flowchart of the identification subsystem (Offline enrollment);
- Fig. 5 schematically shows a flowchart of an online enrollment system ;
- Fig. 6 schematically shows a flow chart of the identification system with online enrollment;
- Fig. 7 schematically shows the architecture of the identification subsystem;
- Fig. 8 shows a training set of a certain user before alignment and after ASM alignment;
- Fig. 9 scematically shows division into segments using level of curvature;
- Fig. 10 illustrates a sample-set of trajectories, where a curvature test was made in order to find segments; and
- Fig. 11 schematically shows how segments are constructed on the trajectory.

## Detailed Description of the Embodiments of the Invention

The present invention proposes a system for real time identification users based on a user-decided 3D hand motion gesture representing his/her signature. The system comprises a 3D camera for acquiring images of said 3D gestures when performed in front of said camera; a memory for storing said images;_a computer for analyzing images representing trajectories of said gesture and for extracting typical features related to said user during a training stage; a screen for displaying a typical trajectory containing said features to said user; a database for storing said typical features after said training stage; and a processing unit for comparing the typical features extracted during said training stage to features extracted online. Custom based signatures offer more intuitiveness and ease of use, compared to predefined templates. In this system, the user enrolls in a one-time process of 20 some samples of his/her signature. The system builds a template based on these training samples for future classification. The training phase of the system is interactive and gives the user feedback following each sample. The feedback requires the user to select a new signature if it is too similar to signatures already stored in the system's database, or if there is too much variation in the user's samples. The user's signature is divided into segments and features incorporate information on the trajectory and the velocity of the motion. The system can capture signatures both in 2D and in 3D, when combined with a tracking system with such capabilities.

## Main characteristics

1. This proposed system is a module for a television or an electronic device controlled by hand gestures. The system's input is the user's trajectory for each signature, gathered from the system's hand tracking device.
2. The system has two main parts: a onetime enrollment session and an identification part used every time the user uses the television or wishes to start identification.
3. The system uses a learning algorithm that constructs a population of signatures for each user, since there is a difference in the dynamic motion when a user performs the same signature multiple times.
The system can capture signatures both in 2D and in 3D, when combined with a tracking system with such capabilities. Active Shape Models (ASM) provides a rotation alignment that allows the signature to best fit a certain pattern. The signature may be rotated either in a single plane or as a 3D object in space for achieving a best 3D fit. ASM allows scaling of the signature, which removes variance due to different distances from the camera. The rotation, scaling and translation are done simultaneously.
An enrollment feature allows the user to decide on his/her own signature. The user must repeat the signature multiple times to train the system. In case the system identifies too much variance in the user's movements (i.e., the user does not make his signature in the same form every time), the system advises the user to construct a different signature.
The variance in the user's signatures is measured online by the number of clusters the algorithm creates for the user. An empirical threshold is set on the number of allowed clusters before the system decides the variance is too high.
4. During the enrollment, when the user repeats his/ her signature, the system checks proximity to signatures already stored in the system, and warns the user if his/her signature is likely to be too similar to another.
5. After a successful enrollment of a user's signature, the user can be identified by presenting his/her signature gesture to the system. The system can identify users that try to imitate the signature of a different user.

**System Architecture**

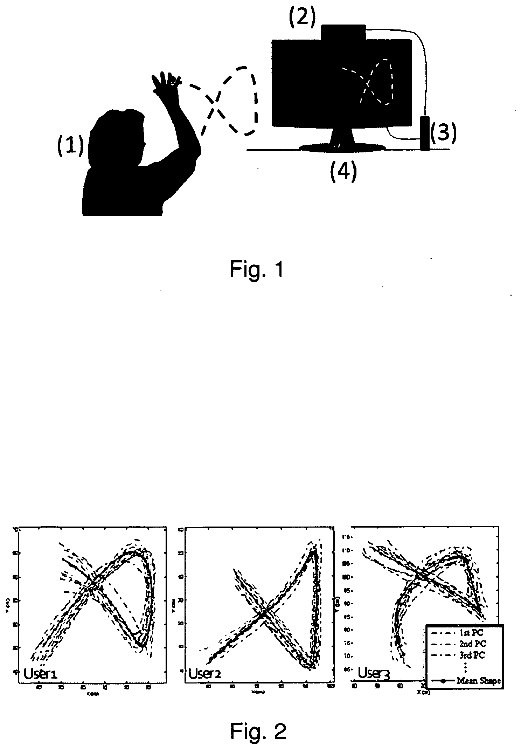

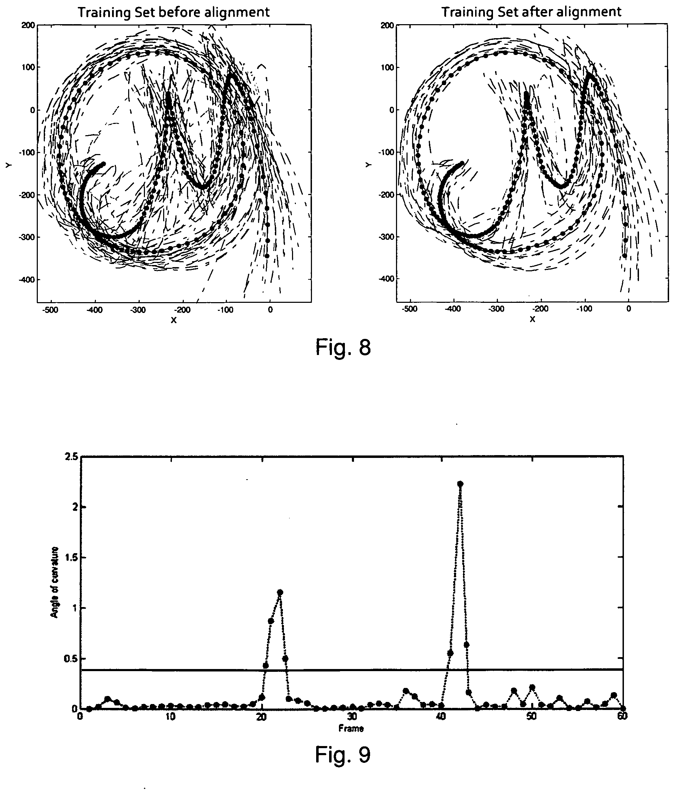

The present invention is based on the ability to identify individuals due to differences and variance in making dynamic hand gestures. Fig. 2 shows an illustration of the difference in performing the same shape by three different individuals. The system can be used in two different ways: using a predefined gesture (such as the X gesture shown in Fig. 2), or using a user decided signature. An example of a user decided signature is shown in Fig. 8.

The user identification system consists of two main parts: an enrollment subsystem and an identification subsystem. In both parts, capturing hand gesture motion is done using a 3D camera and hand tracking algorithm.

**Architecture of the enrollment subsystem**

The enrollment system asks the user for his name/serial number and collects plurality of samples of his signature. There are two types of enrollment systems proposed:

- Offline enrollment, where the user performs a constant number of signatures and the system collects those into a database;
- Online enrollment, where feedback is given after every user sample is taken. In case of unrepeatability, (much variation) in comparison with previous samples, the user is offered to start again with a different signature. In case the system identifies that the current gesture is similar to a different user's signature in the database, the system requests that the user will select a different gesture.

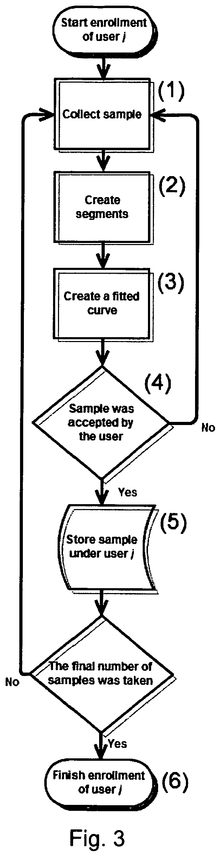

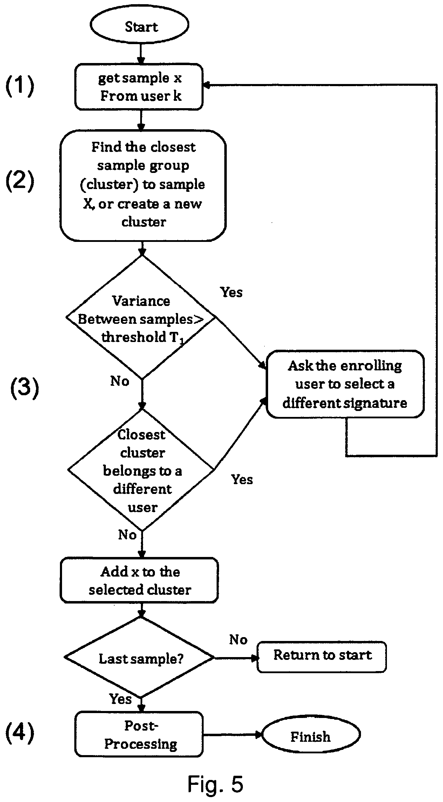

For each signature sample, the system records the user for 6 seconds, and saves a hand trajectory in a 3D space in the database. This trajectory, in order to be compared to other trajectories in the database, needs to have a predefined number of points. A curve fitting technique (Piecewise cubic Hermite interpolation) is used for constructing a synthetic trajectory. Figs. 3 and 5 present a flowchart for collecting samples from a user with offline enrollment and online enrollment, respectively. This phase has 5 main parts:

1. Construction of a trajectory consists of the following phases:

a. Trajectory cleaning: remove start and end noise i.e. when the user waits for the record to start or to end; combine very close points in order for the interpolation to be accurate.

b. Division into segments: In order for the fit to be accurate, and in order to use information regarding the velocity along the trajectory, the trajectory is divided into segments. Points on the new segments are called *landmarks*.

a. Finding the number of segments:
The angle of curvature is calculated for each point using the following equation:

$$\Delta\theta = \cos^{-1}\frac{\vec{u}_i \cdot \vec{u}_{i+1}}{|\vec{u}_i|\,|\vec{u}_{i+1}|} = \cos^{-1}\frac{(x_i - x_{i-1})(x_{i+1} - x_i) + (y_i - y_{i-1})(y_{i+1} - y_i)}{\sqrt{[(x_i - x_{i-1})^2 + (y_i - y_{i-1})^2][(x_{i+1} - x_i)^2 + (y_{i+1} - y_i)^2]}}$$

For each point with an angle of curvature ($\Delta\theta$) that is higher than a threshold, a segment is created. The number of points higher than a threshold is defined as $k$.

b. Constructing segments:

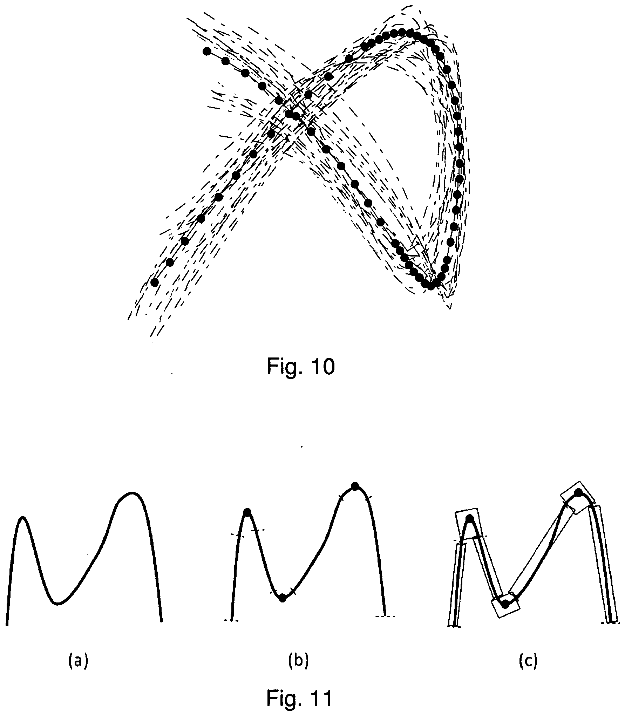

A parameter $h$ is used to determine how many points from each side of the chosen point (a point with high angle of curvature) are used to create a segment. For the $k$'s highest curvature points, **2k + 1** segments are obtained. An example is given in Fig. 11.

A constant number of points, $n$, of the entire trajectory, are distributed between the different segments using the following algorithm:

a) Find the percentage $m_i$ of points of segment $i$ in the initial trajectory, out of the total number of trajectory points.

b) Calculate $F_i$ the expected number of points on segment $i$ of the fitted trajectory.

$$F_i = m_i\,(n + 2k)$$

2k additional points are added to handle points on segment borders.

c) Each segment $i$ receives $\lfloor F_i \rfloor$. Points. The remaining points $(n - \sum_{i=1}^{2k+1} \lfloor F_i \rfloor)$ are distributed iteratively to segments according to $\min_{1 \leq i \leq 2k+1}\{\lceil F_i \rceil - F\}$ until all $n$ points have been distributed.

d) In case of too many (according to an empirical set threshold) segments are identified, e.g. in case of many curved sections, the system iteratively attempts to construct the fitted curve with k=k-1 special points (combining the smallest segment with the smaller adjacent segment) until conditions for the curve fitting (at least 2 points on a segment) are met.

### c. Construction of the new trajectory
A trajectory is formed containing all segments. Duplicate points between segments are erased.

2. Aligning all samples in terms of rotation, scaling and translation.
The alignment is based on an algorithm called "Active Shape Model" for reducing the variance in distance between every shape to the mean shape. The method is iterative. First, a mean shape is computed. Then, all the shapes in the population are aligned - minimizing the distance between all points to the mean shape. After all shapes are aligned, the mean shape is computed again, until convergence. See Fig. 8 for a training set before and after the alignment step.

3. Samples are saved in a 3D matrix: $\{n\}$ X {#samples} X {#users}.

4. A method called "Point Distribution Model" (PDM) is applied. This method uses PCA (Principal Components Analysis) for the reduction of the amount of features. Prior to PDM, the features are the coordinates of every point along the trajectory. After PDM, a reduced representation of the feature space is used for classification. The new features are the following:

$$b = P^T(X^T - \overline{X})$$

Where:

b - New shape features
X - Coordinates vector (one row for each sample containing x, y and z coordinates for all points on the trajectory)
P - The eigenvectors matrix of X's covariance.
$\overline{x}$ - The mean shape coordinates (one row containing x, y and z coordinates)

5. b values are kept as features for classification. The number of rows in the matrix b is the number of principal components (or eigenvalues) picked at the PDM phase. The matrix will be of size {number of PCs} X {number of samples}

## Architecture of the identification subsystem

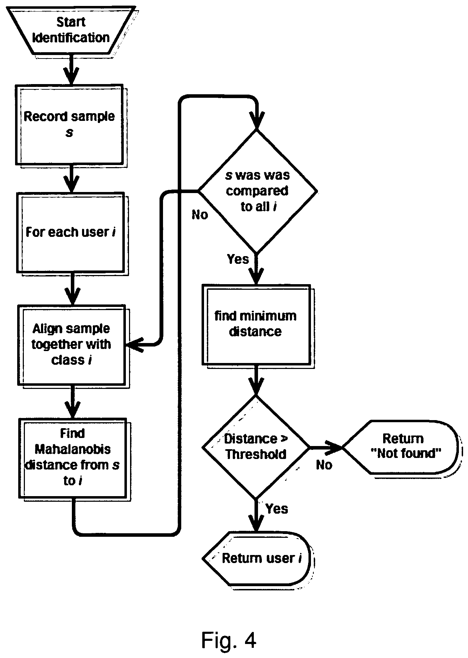

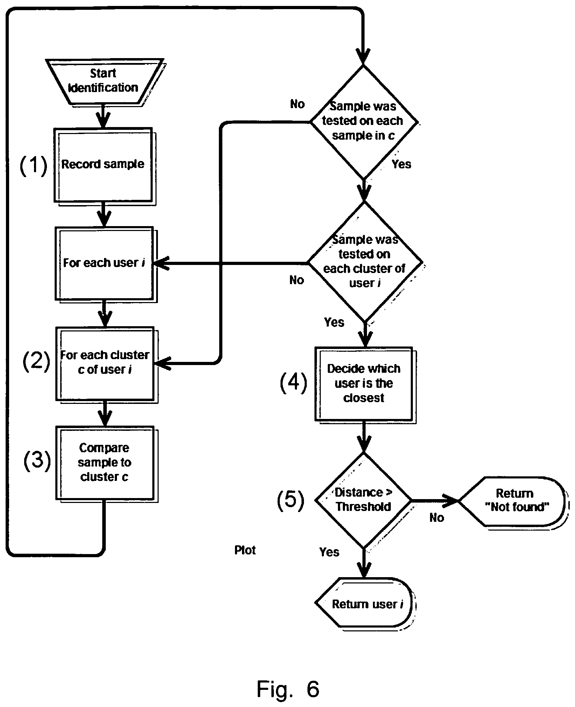

Once a database of users is established, new user samples can be compared to the existing ones. In the classification phase, a new sample is compared to all classes of users in the database, and a distance to each class is computed. If the distance is small enough, the user will be able to log in. if not, the user's entry will be denied. See Figs. 4 and 6 for a description of the identification phase, with offline enrollment and online enrollment respectively.

When receiving a new sample, the feature extraction described in the enrollment system's architecture is used:

a. remove unwanted points
b. divide into segments
c. create a fitted synthetic curve

In order to find the distance, an alignment phase of a new sample to each class in the database is performed, similar to the alignment in the enrollment phase. After alignment, a Mahalanobis distance metric is used to determine proximity to each of the classes. In order to prevent fake identities from entering the system, a threshold for the distance is used. If the distance is bigger than a threshold, the sample is classified as "Not found". Otherwise, it is classified as belonging to the class to which it is the closest.

Fig. 1 shows an illustration of signature acquisition, where three main steps are performed:

(1) The user performs a gesture in front of a 3D camera.
(2) The gesture is captured by a sensor/camera and stored in a memory.
(3) The gesture is analyzed and features are extracted. Camera output is sent to a computer for processing.

The output gesture is shown on the screen for verification.

In Fig. 2 it can be seen an example of the same "X" shape done differently by different individuals, showing the identification opportunities in hand motion.

Fig. 3 schematically shows a flowchart of the Offline enrollment subsystem, comprising the following steps:

(1) Collecting samples: The system captures a hand gesture for a constant duration and creates a trajectory out of the palm's location at each frame.
(2) Creation of segments: The system identifies specific areas in the trajectory using the curvature measure, and constructs segments around each curved area.
(3) Curve fitting: segments are combined and points are distributed uniformly inside each segment. Each sample is built out of a fitted curve defined by a constant number of points.
(4) Sample verification: Each sample is shown to the user for verification. If the tracking phase (1) or the fitting phase (3) were not successful, the user can choose to remove the sample.
(5) Store sample: the fitted trajectory is saved in a database under user i.
(6) Enrollment completion: once the enrollment is finished the database is aligned using ASM and principal points are extracted using PCA.

Fig. 4 schematically shows a flowchart of the Offline enrollment identification subsystem, comprising the following steps:

(1) Record sample: The system captures a hand gesture for a constant duration and creates a trajectory out of the palm's location at each frame. (Identical to phase (1) in the enrollment subsystem). Features from the sample are extracted in an identical way to phases 2, 3, and 6 in Fig. 3.
(2) Align sample: The sample is aligned to the mean of each user's class for testing.
(3) Find similarity distance: Mahalanobis distance is measured between the sample's principal points and each user's class.
(4) Compare: The sample is classified to the user to whom it is the closest. If the Mahalanobis distance exceeds a threshold, the sample is classified as "Not Found".
(5) Plot: the user receives a message that his/her sample was classified or not.

Fig. 5 schematically shows a flowchart of the Online enrollment system:

(1) The system collects a sample using steps 1-4 on the offline enrollment of a new user. Samples of each individual user may be represented by a set of multiple clusters.
(2) The sample of the new user is compared to cluster(s) of the enrolling user and of other users. It is assumed that a signature can be performed in several different manners and therefore groups of clusters of the same user may be created.
(3) The system can notify the enrolling user to select a different signature in the following conditions:

- In the case the number of clusters created for the enrolling user is too high (above a given threshold $T_1$). This case would occur when the enrolling user performs the same gesture in a multitude of ways (the trajectories are very inconsistent, too much variation)
- If the closest cluster to a user's sample is a cluster belonging to a different user (too similar to an already enrolled user).

(4) In a post processing phase, all training samples are reassigned to the nearest cluster in order for the identification part to be accurate as possible. It is assumed that the attributes of a cluster can be changed when a new sample is added to it, and distances between samples to clusters could vary once a new sample is added. Therefore it is possible that a sample would be reassigned to a new cluster from the cluster holding it before the post-processing phase.

Fig. 6 schematically shows a flow chart of the Online enrollment identification system:

7

Instead of user classes, now there are sample groups (clusters) belonging to users. When a person wishes to identify his signature, the sample needs to be compared to all clusters in the system.

a. Record sample: The system captures a hand gesture for a constant duration and creates a trajectory out of the palm's location at each frame. (Identical to phase (1) in the enrollment subsystem). Features from the sample are extracted in an identical way to phases 2, 3, and 6 in Fig. 3.
b. The sample is compared against each cluster of samples in the database for maximum similarity
c. A distance measure selects the closest cluster of samples.
d. The current signature examined is classified to the user that created this cluster.
e. If the distance is above a threshold, the signature is not likely to belong to any cluster, and therefore is classified as "Not Found".

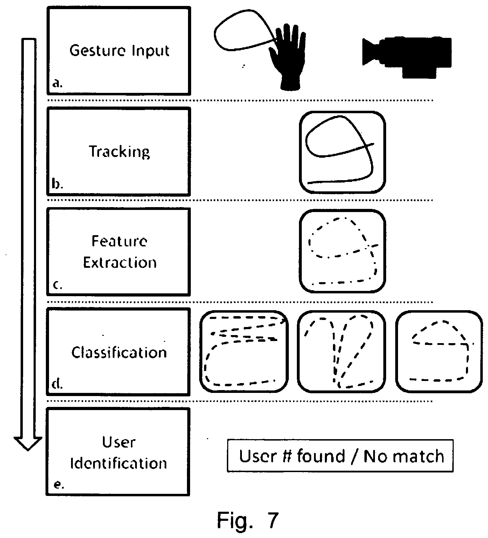

Fig. 7 schematically shows the architecture of the identification subsystem:

(a) Gesture input: hand gesture motion is captured by a sensor
(b) Tracking: palm location at each frame is extracted. Points on each frame construct a trajectory performed by the user.
(c) Feature extraction: includes phases 2, 3, and 6 in Fig. 2.
(d) Classification: The system decides which user performed the signature gesture.
(e) Result: The system displays the chosen user's name or ID if found, or displays "Not Found" in case of uncertainty.

Fig. 8 schematically shows a training set of a certain user before alignment (left) and after the ASM alignment (right). Color lines represent samples, the bold black line is the mean shape.
Fig. 9 schematically shows a division into segments using level of curvature: This Fig. shows the angle of curvature in each frame. Points with large angle of curvature (i.e. bigger than a threshold) are selected to be a part of a newsegment. Each segment includes points distributed uniformly, between the point that starts the segment (the first point above a threshold) and the point that ends the threshold (the last point above a threshold).The example trajectory curvature corresponds to the one of the samples in Fig. 10.
Fig. 10 schematically shows a sample-set of trajectories, where a curvature test was made in order to find segments. Segments that lie around corners have less distance between points than segments on a linear part of the trajectory.
Fig. 11 schematically shows how segments are constructed on the trajectory

(a) The given trajectory (example)
(b) Placing special points (in red). In this example k=3. Special points are the $k$ points with the highest curvature values.
(c) Splitting into segments: a segment is constructed around each special point, and segments are constructed also at the beginning and end of the trajectory. There are 2k+1 segments. In this example - 7 segments.

Although embodiments of the invention have been described by way of illustration, it will be understood that the invention may be carried out with many variations, modifications, and adaptations, without exceeding the scope of the claims.

**Claims**

1. A method for user identification, based on a user-decided hand motion gesture representing his/her signature (1 of Fig. 1), comprising an enrollment part including a onetime offline enrollment session whereby the user performs a constant number of signatures which are stored in a database, wherein said offline enrollment session comprises the following steps:

a. for each signature:

collecting a sample (1 of Fig. 3) by capturing a hand motion gesture representing the signature for a constant duration and creating a trajectory out of the hand's location at each frame;
identifying specific areas in the trajectory using a curvature measure, and constructing segments around each curved area (2 of Fig. 3);
curve fitting by combining said segments, uniformly distributing points inside each of said segments, and building each of said sample out of a fitted curve defined by a constant number of said points (3 of Fig. 3);

showing said sample to the user for verification (4 of Fig. 3);
storing said sample in said database (5 of Fig. 3) under the user if it was successfully verified; and

b. completing enrollment (6 of Fig. 3) by aligning the database using Active Shape Models (ASM) and extracting principal points using Principal Components Analysis (PCA).

2. A method for user identification, based on a user-decided hand motion gesture representing his/her signature (1 of Fig. 1), comprising a onetime online enrollment session whereby feedback is given to the user after each sample is taken, such that the user enrolls him/herself by collecting several training samples of his/her signature which are grouped in a set of multiple clusters, wherein the online enrollment session comprises the following steps:

a. for each signature:

collecting a sample (1 of Fig. 3) by capturing a hand motion gesture representing the signature for a constant duration and creating a trajectory out of the hand's location at each frame;
identifying specific areas in the trajectory using a curvature measure, and constructing segments around each curved area (2 of Fig. 3);
curve fitting by combining said segments, uniformly distributing points inside each of said segments, and building each of said sample out of a fitted curve defined by a constant number of said points (3 of Fig. 3);
showing said sample to the user for verification (4 of Fig. 3);

b. comparing a sample of the enrolling user to clusters of other users (2 of Fig. 5); and
c. notifying the enrolling user to select a different signature (3 of Fig. 5) if:

• a number of groups of samples created for the enrolling user is higher than a threshold (T1), as a result of performing of the signature in inconsistent ways; and
• a closest cluster of the enrolling user is a group of samples belonging to a different user; and

d. reassigning the collected samples to the nearest cluster (4 of Fig. 5).

3. A method according to claim 1, wherein identifying an enrolled user, based on a user-decided hand motion gesture representing his/her signature (1 of Fig. 1), comprises an identification part whereby a new user sample is compared to samples of all classes of users stored in said database and log in of a user is allowed if a similarity distance of said new sample to one of said classes is no greater than a threshold; wherein said identification part is made following offline enrollment, and comprises the following steps:

a. recording the new sample (1 of Fig. 4) whereby a hand gesture is captured for a constant duration, the hand's location at each frame is created, and features from the new sample are extracted in an identical way to said collecting samples step, curve fitting step and the completing enrollment step;
b. aligning the new sample (2 of Fig. 4) such that it is aligned to a mean of each user's class for testing;
c. finding a similarity distance (3 of Fig. 4) such that a Mahalanobis distance is measured between principal points of the new sample and each user's class;
d. classifying the new sample to the user to whom it is the closest (4 of Fig. 4), and classifying the new sample as "Not Found" if the Mahalanobis distance exceeds the threshold; and
e. receiving a message (5 of Fig. 4), by the user, whether his/her sample was classified.

4. A method according to claim 2, wherein identifying an enrolled user, based on a user-decided hand motion gesture representing his/her signature (1 of Fig. 1), comprises an identification part whereby a new user sample is compared to samples of all classes of users stored in said database and log in of a user is allowed if a similarity distance of said new sample to one of said classes is no greater than a threshold; wherein said identification part is made following online enrollment, and comprises the following steps:

a. recording a sample (1 of Fig. 6) whereby a hand gesture is captured for a constant duration and a trajectory is created out of the hand's location at each frame, features from the sample are extracted in an identical way to said collecting samples step, curve fitting step and the completing enrollment step of the offline enrollment session;
b. comparing the sample (3 of Fig. 6) against each cluster of samples in the database for maximum similarity;

c. by a distance measure, selecting a closest cluster of samples (4 of Fig. 6);

d. classifying a current signature being examined to the user that created said closest cluster; and

e. classifying the current signature as "Not Found" (5 of Fig. 6) if a similarity distance is above the threshold, indicating that the current signature does not likely belong to any cluster.

5. A method according to claim 2, wherein in a post processing phase (4 of Fig. 5), clusters that are closer than the additional threshold (T1) are merged into one cluster, so that the classification will be as accurate as possible.

6. A method according to claim 1, wherein the curve fitting step (3 of Fig. 3) comprises the following steps:

a. constructing a trajectory;

b. aligning all samples in terms of rotation, scaling and translation;

c. saving said aligned samples in a 3D matrix: $\{n\}$ X $\{$#samples$\}$ X $\{$#users$\}$;

d. applying a "Point Distribution Model" (PDM) method, using the PCA method for reducing a number of features; and

e. keeping output values of the PDM step as features for classification.

7. A method according to claim 6, wherein the construction of a trajectory comprises the following steps:

a. trajectory cleaning by removing start and end noise;

b. dividing the trajectory into segments; and

c. constructing a new trajectory.

8. A method according to claim 2, wherein the curve fitting step (3 of Fig. 3) comprises the following steps:

a. constructing a trajectory;

b. aligning all samples in terms of rotation, scaling and translation;

c. saving said aligned samples in a 3D matrix: $\{n\}$ X $\{$#samples$\}$ X $\{$#users$\}$;

d. applying a "Point Distribution Model" (PDM) method, using the PCA method for reducing a number of features; and

e. keeping output values of the PDM step as features for classification.

9. A method according to claim 8, wherein the construction of a trajectory comprises the following steps:

a. trajectory cleaning by removing start and end noise;

b. dividing the trajectory into segments; and

c. constructing a new trajectory.

10. A system for user identification based on a user-decided 3D hand motion gesture representing his/her signature (1 of Fig. 1), which comprises:

a. a 3D camera for acquiring images of said 3D gesture (2 of Fig. 1) when performed in front of said camera;

b. a memory for storing said images;

c. a computer for analyzing images representing trajectories of said gesture (3 of Fig. 1) and for extracting typical features related to said user during a training stage;

d. a screen (4 of Fig. 1) for displaying a typical trajectory containing said features to said user;

e. a database for storing said typical features after said training stage; and

a processing unit, operable to implement the steps recited in any of method claims 1-9, using said images and said typical features.

**Patentansprüche**

1. Verfahren zur Benutzeridentifizierung, basierend auf einer vom Benutzer bestimmten Handbewegungsgeste, die seine/ihre Signatur darstellt (1 von Fig. 1), umfassend einen Anmeldeteil mit einer einmaligen Offline-Anmeldesitzung, wobei der Benutzer eine konstante Anzahl von Signaturen ausführt, die in einer Datenbank gespeichert werden, wobei die Offline-Anmeldesitzung die folgenden Schritte umfasst:

a. für jede Signatur:

Sammeln einer Probe (1 von Fig. 3) durch Erfassen einer Handbewegungsgeste, die die Signatur darstellt, für eine konstante Dauer und Erstellen einer Bahn anhand der Handposition bei jedem Bild,
Identifizieren von spezifischen Bereichen in der Bahn unter Verwendung eines Krümmungsmaßes und Aufbauen von Segmenten um jeden gekrümmten Bereich (2 von Fig. 3);
Krümmungsanpassen durch Kombinieren der Segmente, gleichmäßiges Verteilen von Punkten innerhalb jedes der Segmente und Aufbauen jeder der Probe aus einer angepassten Krümmung, die durch eine konstante Anzahl der Punkte definiert ist (3 von Fig. 3);
Zeigen der Probe dem Benutzer zur Bestätigung (4 von Fig. 3);
Speichern der Probe in der Datenbank (5 von Fig. 3) unter dem Benutzer, wenn sie erfolgreich bestätigt wurde; und

b. Abschließen der Anmeldung (6 von Fig. 3) durch Abgleichen der Datenbank unter Verwendung von Active Shape Models (ASM) und Extrahieren von Hauptpunkten unter Verwendung der Principal Components Analysis (PCA).

2. Verfahren zur Benutzeridentifizierung, basierend auf einer vom Benutzer bestimmten Handbewegungsgeste, die seine/ihre Signatur darstellt (1 von Fig. 1), umfassend eine einmalige Online-Anmeldesitzung, wobei dem Benutzer nach jeder Probennahme eine Rückmeldung gegeben wird, so dass sich der Benutzer durch Sammeln mehrerer Trainingsproben seiner/ihrer Signatur anmeldet, die in einem Satz von mehreren Clustern zusammengefasst sind, wobei die Online-Anmeldesitzung die folgenden Schritte umfasst:

a. für jede Signatur:

Sammeln einer Probe (1 von Fig. 3) durch Erfassen einer Handbewegungsgeste, die die Signatur darstellt, für eine konstante Dauer und Erstellen einer Bahn anhand der Handposition bei jedem Bild;
Identifizieren von spezifischen Bereichen in der Bahn unter Verwendung eines Krümmungsmaßes und Aufbauen von Segmenten um jeden gekrümmten Bereich (2 von Fig. 3);
Krümmungsanpassen durch Kombinieren der Segmente, gleichmäßiges Verteilen von Punkten innerhalb jedes der Segmente und Aufbauen jeder der Probe aus einer angepassten Krümmung, die durch eine konstante Anzahl der Punkte definiert ist (3 von Fig. 3);
Zeigen der Probe dem Benutzer zur Bestätigung (4 von Fig. 3);

b. Vergleichen einer Probe des sich anmeldenden Benutzers mit Clustern von anderen Benutzern (2 von Fig. 5); und
c. Benachrichtigen des sich anmeldenden Benutzers, um eine andere Signatur auszuwählen (3 von Fig. 5), falls:

• eine Anzahl von Gruppen von Proben, die für den sich anmeldenden Benutzer erstellt wurden, als Folge des Durchführens der Signatur auf inkonsistente Weise über einem Schwellenwert (T1) liegt; und
• ein nächstes Cluster des sich anmeldenden Benutzers eine Gruppe von Proben ist, die zu einem anderen Benutzer gehören; und

d. erneutes Zuordnen der gesammelten Proben zu dem nächsten Cluster (4 von Fig. 5).

3. Verfahren gemäß Anspruch 1, wobei das Identifizieren eines angemeldeten Benutzers basierend auf einer vom Benutzer bestimmten Handbewegungsgeste, die seine/ihre Signatur darstellt (1 von Fig. 1), einen Identifizierungsteil umfasst, wobei eine neue Benutzerprobe mit Proben aller Klassen von Benutzern verglichen wird, die in der Datenbank gespeichert sind, und das Einloggen eines Benutzers zugelassen wird, falls ein Ähnlichkeitsabstand der neuen Probe zu einer der Klassen nicht über einem Schwellenwert liegt; wobei der Identifizierungsteil nach der Offline-Anmeldung erfolgt und die folgenden Schritte umfasst:

a. Aufzeichnen der neuen Probe (1 von Fig. 4), wobei eine Handgeste für eine konstante Dauer erfasst wird, die Handposition bei jedem Bild erstellt wird und Merkmale aus der neuen Probe auf eine Weise extrahiert werden, die zu dem Schritt des Sammelns von Proben, dem Schritt der Krümmungsanpassung und dem Schritt des Abschließens der Anmeldung identisch ist;
b. Abgleichen der neuen Probe (2 von Fig. 4), so dass sie mit einem Mittel jeder Benutzerklasse zum Testen abgeglichen wird;

c. Finden eines Ähnlichkeitsabstands (3 von Fig. 4), so dass ein Mahalanobis-Abstand zwischen Hauptpunkten der neuen Probe und jeder Benutzerklasse gemessen wird;

d. Klassifizieren der neuen Probe zum Benutzer, dem sie am nächsten kommt (4 von Fig. 4), und Klassifizieren der neuen Probe als "nicht gefunden", falls der Mahalanobis-Abstand den Schwellenwert übersteigt; und

e. Empfangen einer Nachricht (5 von Fig. 4), durch den Benutzer, ob seine/ihre Probe klassifiziert wurde.

4. Verfahren gemäß Anspruch 2, wobei das Identifizieren eines angemeldeten Benutzers basierend auf einer vom Benutzer bestimmten Handbewegungsgeste, die seine/ihre Signatur darstellt (1 von Fig. 1), einen Identifizierungsteil umfasst, wobei eine neue Benutzerprobe mit Proben aller Klassen von Benutzern verglichen wird, die in der Datenbank gespeichert sind, und das Einloggen eines Benutzers zugelassen wird, falls ein Ähnlichkeitsabstand der neuen Probe zu einer der Klassen nicht über einem Schwellenwert liegt; wobei der Identifizierungsteil nach der Online-Anmeldung erfolgt und die folgenden Schritte umfasst:

a. Aufzeichnen einer Probe (1 von Fig. 6), wobei eine Handgeste für eine konstante Dauer erfasst wird und eine Bahn anhand der Handposition bei jedem Bild erstellt wird, Merkmale aus der Probe auf eine Weise extrahiert werden, die identisch ist zu dem Schritt des Sammelns von Proben, dem Schritt der Krümmungsanpassung und dem Schritt des Abschließens der Anmeldung der Offline-Anmeldesitzung;

b. Vergleichen der Probe (3 von Fig. 6) mit jedem Cluster von Proben in der Datenbank auf maximale Ähnlichkeit;

c. durch ein Abstandsmaß Auswählen eines nächsten Clusters von Proben (4 von Fig. 6);

d. Klassifizieren einer aktuellen untersuchten Signatur zum Benutzer, der den nächsten Cluster erstellt hat; und

e. Klassifizieren der aktuellen Signatur als "nicht gefunden" (5 von Fig. 6), falls ein Ähnlichkeitsabstand über dem Schwellenwert liegt, Anzeigen, dass die aktuelle Signatur wahrscheinlich nicht zu irgendeinem Cluster gehört.

5. Verfahren gemäß Anspruch 2, wobei in einer Nachverarbeitungsphase (4 von Fig. 5) Cluster, die näher als der zusätzliche Schwellenwert (T1) sind, in einen Cluster zusammengeführt werden, so dass die Klassifizierung möglichst genau ist.

6. Verfahren gemäß Anspruch 1, wobei der Schritt der Krümmungsanpassung (3 von Fig. 3) die folgenden Schritte umfasst:

a. Aufbauen einer Bahn;

b. Abgleichen aller Proben in Bezug auf Drehung, Skalierung und Verschiebung;

c. Sichern der abgeglichenen Proben in einer 3D-Matrix: {n} X {#samples} X {#users};

d. Anwenden eines Punktverteilungsmodellverfahrens (PDM-Verfahren, Point Distribution Model) unter Verwendung des PCA-Verfahrens zum Reduzieren einer Anzahl von Merkmalen; und

e. Behalten von Ausgabewerten des PDM-Schritts als Merkmale zur Klassifizierung.

7. Verfahren gemäß Anspruch 6, wobei der Aufbau einer Bahn die folgenden Schritte umfasst:

a. Bahnbereinigung durch Entfernen von Start- und Endrauschen;

b. Teilen der Bahn in Segmente; und

c. Aufbauen einer neuen Bahn.

8. Verfahren gemäß Anspruch 2, wobei der Schritt der Krümmungsanpassung (3 von Fig. 3) die folgenden Schritte umfasst:

a. Aufbauen einer Bahn;

b. Abgleichen aller Proben in Bezug auf Drehung, Skalierung und Verschiebung;

c. Sichern der abgeglichenen Proben in einer 3D-Matrix: {n} X {#samples} X {#users};

d. Anwenden eines Punktverteilungsmodellverfahrens (PDM-Verfahren, Point Distribution Model) unter Verwendung des PCA-Verfahrens zum Reduzieren einer Anzahl von Merkmalen; und

e. Behalten von Ausgabewerten des PDM-Schritts als Merkmale zur Klassifizierung.

9. Verfahren gemäß Anspruch 8, wobei der Aufbau einer Bahn die folgenden Schritte umfasst:

a. Bahnbereinigung durch Entfernen von Start- und Endrauschen;

b. Teilen der Bahn in Segmente; und

c. Aufbauen einer neuen Bahn.

10. System zur Benutzeridentifizierung basierend auf einer vom Benutzer bestimmten 3D-Handbewegungsgeste, die seine/ihre Signatur darstellt (1 von Fig. 1), welches umfasst:

a. eine 3D-Kamera zum Erfassen von Bildern der 3D-Geste (2 von Fig. 1), wenn diese vor der Kamera ausgeführt wird;
b. einen Speicher zum Speichern der Bilder;
c. einen Computer zum Analysieren von Bildern, die Bahnen der Geste darstellen (3 von Fig. 1) und zum Extrahieren von typischen Merkmalen, die sich auf den Benutzer beziehen, während einer Trainingsstufe;
d. einen Bildschirm (4 von Fig. 1) zum Anzeigen einer typischen Bahn, die die Merkmale enthält, für den Benutzer;
e. eine Datenbank zum Speichern der typischen Merkmale nach der Trainingsstufe; und
eine Verarbeitungseinheit, die bedienbar ist, um die Schritte zu implementieren, die in einem der Verfahrensansprüche 1-9 angegeben sind, unter Verwendung der Bilder und der typischen Merkmale.

## Revendications

1. Procédé d'identification d'utilisateur, basé sur un geste de mouvement de la main décidé par l'utilisateur qui représente sa signature (1 de Fig. 1), comprenant une partie d'inscription qui inclut une session d'inscription hors ligne unique selon laquelle l'utilisateur effectue un nombre constant de signatures qui sont stockées dans une base de données, dans lequel ladite session d'inscription hors ligne comprend les étapes suivantes :

a. pour chaque signature :

la collecte d'un échantillon (1 de Fig. 3) en capturant un geste de mouvement de la main qui représente la signature pendant une durée constante et en créant une trajectoire à partir de la localisation de la main au niveau de chaque image ;
l'identification de zones spécifiques dans la trajectoire en utilisant une mesure de courbure, et la construction de segments autour de chaque zone incurvée (2 de Fig. 3) ;
l'ajustement d'une courbe en combinant lesdits segments, la distribution uniforme de points à l'intérieur de chacun desdits segments et l'élaboration de chacun desdits échantillons à partir d'une courbe ajustée qui est définie par un nombre constant desdits points (3 de Fig. 3) ;
la présentation dudit échantillon à l'utilisateur pour vérification (4 de Fig. 3) ; et
le stockage dudit échantillon dans ladite base de données (5 de Fig. 3) sous l'utilisateur s'il a été vérifié avec succès ; et

b. le parachèvement de l'inscription (6 de Fig. 3) en alignant la base de données en utilisant des modèles à forme active (ASM) et en extrayant des points principaux en utilisant une analyse en composantes principales (PCA).

2. Procédé d'identification d'utilisateur, basé sur un geste de mouvement de la main décidé par l'utilisateur qui représente sa signature (1 de Fig. 1), comprenant une session d'inscription en ligne unique selon laquelle un retour est fourni à l'utilisateur après que chaque échantillon est prélevé, de telle sorte que l'utilisateur s'inscrive lui-même en collectant plusieurs échantillons d'apprentissage de sa signature qui sont groupés selon un jeu de multiples grappes, dans lequel la session d'inscription en ligne comprend les étapes suivantes :

a. pour chaque signature :

la collecte d'un échantillon (1 de Fig. 3) en capturant un geste de mouvement de la main qui représente la signature pendant une durée constante et en créant une trajectoire à partir de la localisation de la main au niveau de chaque image ;
l'identification de zones spécifiques dans la trajectoire en utilisant une mesure de courbure, et la construction de segments autour de chaque zone incurvée (2 de Fig. 3) ;
l'ajustement d'une courbe en combinant lesdits segments, la distribution uniforme de points à l'intérieur de chacun desdits segments et l'élaboration de chacun desdits échantillons à partir d'une courbe ajustée qui est définie par un nombre constant desdits points (3 de Fig. 3) ; et
la présentation dudit échantillon à l'utilisateur pour vérification (4 de Fig. 3) ;

b. la comparaison d'un échantillon de l'utilisateur en cours d'inscription avec des grappes d'autres utilisateurs (2 de Fig. 5) ; et

c. la notification à l'utilisateur en cours d'inscription de sélectionner une signature différente (3 de Fig. 5) si :

• un nombre de groupes d'échantillons qui sont créés pour l'utilisateur en cours d'inscription est supérieur à un seuil (T1), en tant que résultat du fait que la signature est effectuée selon des façons irrégulières ; et
• une grappe la plus proche de l'utilisateur en cours d'inscription est un groupe d'échantillons qui appartiennent à un utilisateur différent ; et

d. la réattribution des échantillons collectés à la grappe la plus proche (4 de Fig. 5).

3. Procédé selon la revendication 1, dans lequel l'identification d'un utilisateur inscrit, basée sur un geste de mouvement de la main décidé par l'utilisateur qui représente sa signature (1 de Fig. 1), comprend une partie d'identification selon laquelle un nouvel échantillon d'utilisateur est comparé avec des échantillons de toutes les classes d'utilisateurs qui sont stockés dans ladite base de données et la connexion d'un utilisateur est autorisée si une distance de similarité dudit nouvel échantillon par rapport à l'une desdites classes n'est pas supérieure à un seuil ; dans lequel ladite partie d'identification est exécutée à la suite d'une inscription hors ligne, et elle comprend les étapes suivantes :

a. l'enregistrement du nouvel échantillon (1 de Fig. 4) selon lequel un geste de la main est capturé pendant une durée constante, la localisation de la main au niveau de chaque image est créée et des caractéristiques issues du nouvel échantillon sont extraites d'une façon identique à ladite étape de collecte d'échantillons, à ladite étape d'ajustement de courbe et à ladite étape de parachèvement d'inscription ;
b. l'alignement du nouvel échantillon (2 de Fig. 4) de telle sorte qu'il soit aligné par rapport à une moyenne de chaque classe d'utilisateurs dans le but d'un test ;
c. la recherche d'une distance de similarité (3 de Fig. 4) de telle sorte qu'une distance de Mahalanobis soit mesurée entre des points principaux du nouvel échantillon et chaque classe d'utilisateurs ;
d. la classification du nouvel échantillon par rapport à l'utilisateur dont il est le plus proche (4 de Fig. 4) et la classification du nouvel échantillon en tant que "non trouvé" si la distance de Mahalanobis excède le seuil ; et
e. la réception d'un message (5 de Fig. 4), par l'utilisateur, en fonction de la classification de son échantillon.

4. Procédé selon la revendication 2, dans lequel l'identification d'un utilisateur inscrit, basée sur un geste de mouvement de la main décidé par l'utilisateur qui représente sa signature (1 de Fig. 1), comprend une partie d'identification selon laquelle un nouvel échantillon d'utilisateur est comparé avec des échantillons de toutes les classes d'utilisateurs qui sont stockés dans ladite base de données et la connexion d'un utilisateur est autorisée si une distance de similarité dudit nouvel échantillon par rapport à l'une desdites classes n'est pas supérieure à un seuil ; dans lequel ladite partie d'identification est exécutée à la suite d'une inscription en ligne, et elle comprend les étapes suivantes :

a. l'enregistrement d'un échantillon (1 de Fig. 6) selon lequel un geste de la main est capturé pendant une durée constante et une trajectoire est créée à partir de la localisation de la main au niveau de chaque image, des caractéristiques issues de l'échantillon sont extraites d'une façon identique à ladite étape de collecte d'échantillons, à ladite étape d'ajustement de courbe et à ladite étape de parachèvement d'inscription de la session d'inscription hors ligne ;
b. la comparaison de l'échantillon (3 de Fig. 6) avec chaque grappe d'échantillons dans la base de données en ce qui concerne une similarité maximum ;
c. au moyen d'une mesure de distance, la sélection d'une grappe d'échantillons la plus proche (4 de Fig. 6) ;
d. la classification d'une signature courante qui est examinée pour l'utilisateur qui a créé ladite grappe la plus proche ; et
e. la classification de la signature courante en tant que "non trouvée" (5 de Fig. 6) si une distance de similarité est au-delà du seuil, ce qui indique que la signature courante n'appartient probablement pas à une quelconque grappe.

5. Procédé selon la revendication 2, dans lequel, lors d'une phase de post-traitement (4 de Fig. 5), des grappes qui sont plus proches que le seuil additionnel (T1) sont fusionnées selon une seule grappe, de telle sorte que la classification soit aussi précise que possible.

6. Procédé selon la revendication 1, dans lequel l'étape d'ajustement de courbe (3 de Fig. 3) comprend les étapes suivantes :

a. la construction d'une trajectoire ;
b. l'alignement de tous les échantillons en termes de rotation, de mise à l'échelle et de translation ;
c. la sauvegarde desdits échantillons alignés selon une matrice 3D : {n} x {#samples} x {#users} ;
d. l'application d'un procédé par "modèle de distribution de points" (PDM), en utilisant le procédé PCA pour réduire un nombre de caractéristiques ; et
e. le fait de conserver des valeurs de sortie de l'étape PDM en tant que caractéristiques pour la classification.

**7.** Procédé selon la revendication 6, dans lequel la construction d'une trajectoire comprend les étapes suivantes :

a. le nettoyage de la trajectoire en supprimant le bruit de début et de fin ;
b. la division de la trajectoire selon des segments ; et
c. la construction d'une nouvelle trajectoire.

**8.** Procédé selon la revendication 2, dans lequel l'étape d'ajustement de courbe (3 de Fig. 3) comprend les étapes suivantes :

a. la construction d'une trajectoire ;
b. l'alignement de tous les échantillons en termes de rotation, de mise à l'échelle et de translation ;
c. la sauvegarde desdits échantillons alignés selon une matrice 3D : {n} x {#samples} x {#users} ;
d. l'application d'un procédé par "modèle de distribution de points" (PDM), en utilisant le procédé PCA pour réduire un nombre de caractéristiques ; et
e. le fait de conserver des valeurs de sortie de l'étape PDM en tant que caractéristiques pour la classification.

**9.** Procédé selon la revendication 8, dans lequel la construction d'une trajectoire comprend les étapes suivantes :

a. le nettoyage de la trajectoire en supprimant le bruit de début et de fin ;
b. la division de la trajectoire selon des segments ; et
c. la construction d'une nouvelle trajectoire.

**10.** Système d'identification d'utilisateur, basé sur un geste de mouvement de la main 3D décidé par l'utilisateur qui représente sa signature (1 de Fig.1), lequel comprend :

a. une caméra 3D pour acquérir des images dudit geste 3D (2 de Fig. 1) lorsqu'il est réalisé devant ladite caméra ;
b. une mémoire pour stocker lesdites images ;
c. un ordinateur pour analyser des images qui représentent des trajectoires dudit geste (3 de Fig. 1) et pour extraire des caractéristiques typiques qui sont rapportées audit utilisateur pendant une phase d'apprentissage ;
d. un écran (4 de Fig. 1) pour afficher une trajectoire typique qui contient lesdites caractéristiques pour ledit utilisateur ;
e. une base de données pour stocker lesdites caractéristiques typiques après ladite phase d'apprentissage ; et une unité de traitement qui peut être rendue opérationnelle pour mettre en œuvre les étapes mentionnées selon l'une quelconque des revendications de procédé 1 à 9, en utilisant lesdites images et lesdites caractéristiques typiques.

Fig. 1

Fig. 2

**Fig. 3**

Fig. 4

**(1)** get sample x From user k

**(2)** Find the closest sample group (cluster) to sample X, or create a new cluster

Variance Between samples> threshold T₁

Yes

No

**(3)** Closest cluster belongs to a different user

Yes

No

Ask the enrolling user to select a different signature

Add x to the selected cluster

Last sample? — No → Return to start

Yes

**(4)** Post-Processing → Finish

Start

Fig. 5

Fig. 6

Fig. 7

Fig. 8

Fig. 9

Fig. 10

(a)                    (b)                    (c)

Fig. 11

**EP 2 535 835 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2166487 A
- US 20080020733 A
- US 20070252898 A
- EP 2605172 A